# FASCICULE DE BREVET EUROPEEN

(11) **EP 4 658 979 B1**
(45) Date de publication et mention de la délivrance du brevet: **18.11.2026**
(21) Numéro de dépôt: 24705714.4
(22) Date de dépôt: 25.01.2024
(51) Int. Cl.: G01D 5/252, H01Q 1/22, G01D 21/00, G06K 19/07, G06K 19/077

(54) **DISPOSITIF DE DÉTECTION DE POSITION D'UNE PIÈCE MOBILE, PROCÉDÉ ET AÉRONEF ASSOCIÉS**
VORRICHTUNG ZUM ERKENNEN DER POSITION EINES BEWEGLICHEN TEILS, ZUGEHÖRIGES VERFAHREN UND ZUGEHÖRIGES FLUGZEUG
DEVICE FOR DETECTING THE POSITION OF A MOBILE PART, RELATED METHOD AND RELATED AIRCRAFT

(30) Priorité: 31.01.2023 FR 2300869
(43) Date de publication de la demande: 10.12.2025
(73) Titulaire: Safran Nacelles, 76700 Gonfreville-l'Orcher (FR)
(72) Inventeur: MERIEL, Olivier, 77550 MOISSY-CRAMAYEL (FR)
(74) Mandataire: Casalonga
(86) Numéro de dépôt international: PCT/FR2024/050104
(87) Numéro de publication internationale: WO 2024/161080

(56) Documents cités:
- WO-A1-2017/123949
- WO-A1-2019/113673
- JP-A- 2017 181 495
- US-A1- 2010 079 289

## Description

### Domaine technique

L'invention concerne, de manière générale, les systèmes d'acquisition de données dans le domaine aéronautique, et se rapporte plus particulièrement à un dispositif de détection d'une position mécanique d'une pièce mobile dans un moteur d'aéronef.

L'invention concerne notamment un dispositif de détection de la position d'une pièce mobile ne requérant ni connexion filaire, ni batterie embarquée.

### Techniques antérieures

L'environnement d'un moteur d'aéronef est très encombré et comporte de très nombreux équipements à surveiller, que ce soit pour assurer la maintenance de l'appareil, pour assister la commande ou pour aider au diagnostic d'un éventuel problème technique.

En particulier, il peut être nécessaire de connaitre la position d'éléments tels qu'une porte d'inverseur de poussée afin d'assurer la performance aérodynamique attachée à la performance moteur de l'aéronef.

Afin de surveiller ces équipements, des capteurs sont installés dans l'environnement moteur afin de détecter et récupérer des données relatives aux équipements observés. Ces capteurs doivent répondre à plusieurs contraintes dont des contraintes d'encombrement afin de pouvoir être intégrés à l'environnement du moteur, et des contraintes de position imposant de positionner les capteurs à proximité des équipements afin qu'ils soient capables de capter lesdites données.

Ainsi, des capteurs dits « passifs » ne requérant ni batterie embarquée ni connexion filaire ont été développés pour répondre à ces contraintes.

Ces capteurs reposent principalement sur deux technologies.

La première technologie est la technologie piézoélectrique. Les capteurs piézoélectriques comprennent un générateur piézoélectrique apte à convertir un effort mécanique subi en un courant électrique. Néanmoins, ces capteurs présentent l'inconvénient de ne fonctionner que lors du changement d'état de la pièce mobile, et ne permettent donc pas une vérification postérieure ou à une requête tendant à obtenir la position occupée par cette pièce mobile.

La seconde technologie est la radio-identification, communément appelée RFID pour le terme anglosaxon « Radio Frequency Identification ». Cette technologie fonctionne à l'aide d'une étiquette RFID et d'un lecteur RFID émettant des ondes électromagnétiques telles que des requêtes d'interrogation destinées à l'étiquette RFID. Le document WO 2017/123949 A1 décrit un tel système de détection de position.

Les étiquettes RFID dites « passives » fonctionnent sans batterie embarquée et sans connexion filaire, et tirent leur énergie de l'onde électromagnétique émise par le lecteur RFID. La technologie RFID permet de mesurer une certaine variété de données telles que la température, le voltage, l'humidité ou la pression.

Toutefois, la nature même d'une étiquette RFID passive implique qu'elle n'est apte à fonctionner, c'est-à-dire à détecter et récupérer des données, que lorsque le lecteur RFID émet des ondes électromagnétiques. En effet, si un évènement à surveiller par le capteur intervient alors que l'étiquette n'est pas interrogée par le lecteur RFID, cet événement ne pourra être détecté par l'étiquette.

Il n'existe donc pas de solution pour disposer d'un capteur de position mécanique d'une pièce mobile ne requérant ni batterie embarquée ni connexion filaire.

La présente invention vise donc à pallier les inconvénients précités et à proposer un dispositif de détection de la position mécanique occupée par une pièce mobile ne requérant ni connexion filaire, ni batterie embarquée.

La présente invention a donc pour objet un dispositif de détection de position d'une pièce mobile entre une première position extrême, une deuxième position extrême et au moins une position intermédiaire, le dispositif de détection comprenant une antenne fixe et une pluralité d'étiquettes de radio-identification disposées le long du trajet de la pièce mobile entre lesdites positions extrêmes et intermédiaires.

Le dispositif comprend un contacteur mécanique configuré pour établir une connexion électrique entre l'antenne et une unique combinaison d'au moins une étiquette de radio-identification pour chaque position de la pièce mobile.

Avantageusement, le contacteur mécanique est disposé autour de la pièce mobile et comprend une armature fixe et une portion mobile solidarisée à la pièce mobile.

De manière préférentielle, l'armature fixe comprend une pluralité de paires de broches de connexion, chaque étiquette de radio-identification étant associée à une unique paire de broches comprenant une première broche au contact de l'étiquette de radio-identification à laquelle ladite paire de broche est associée et une deuxième broche au contact de l'antenne.

Avantageusement, la portion mobile est solidarisée à la pièce mobile, et comprend une pluralité de passerelles aptes à conduire le courant entre les deux broches d'une paire de broches de connexion.

Avantageusement, la pluralité de passerelles sont positionnées sur la pièce mobile de sorte que, pour chaque position occupée par la pièce mobile, le courant est transmis uniquement entre les broches des paires associées aux étiquettes de radio-identification formant la combinaison unique d'étiquette de radio-identification pour ladite position occupée par la pièce mobile.

L'invention a également pour objet un procédé de détection de position d'une pièce mobile entre une première position extrême, une deuxième position extrême et au moins une position intermédiaire, pour la mise-en-œuvre d'un dispositif de détection tel que défini précédemment.

Le procédé comprend les étapes suivantes ;
- Emission par un lecteur de radio-identification distant d'une requête d'interrogation de la position occupée par la pièce mobile destinée à l'une des étiquettes de la pluralité d'étiquettes,
- Réception par l'antenne de la requête d'interrogation émise par le lecteur de radio-identification,
- Activation des étiquettes de radio-identification de l'unique combinaison d'étiquettes de radio-identification pour ladite position occupée par la pièce mobile,
- Traitement individuel par chaque étiquette de radio-identification activée de la requête d'interrogation
- Selon le résultat du traitement, élaboration par l'étiquette de radio-identification à laquelle est destinée la requête d'interrogation d'une réponse individuelle à la requête d'interrogation, si cette étiquette est activée,
- Emission par l'antenne de la réponse individuelle l'étiquette élaborée au lecteur de radio-identification.
- Répétition des étapes précédentes pour chacune des autres étiquettes de la pluralité d'étiquettes, de sorte qu'une requête d'interrogation soit émise par le lecteur de radio-identification pour chacune des étiquettes de la pluralité d'étiquettes.
- Détermination de la position occupée par la pièce mobile.

Avantageusement, les étiquettes de radio-identification de la pluralité d'étiquettes comprennent chacune un calculateur, l'étape de traitement individuel par chaque étiquette activée de la requête d'interrogation comprenant les étapes suivantes pour chaque étiquette activée :
- Démodulation de la requête d'interrogation,
- Transmission de la requête démodulée au calculateur, et
- Vérification de la validité de la requête d'interrogation.

Avantageusement, la répétition de l'étape d'émission est réalisée après réception d'une réponse à la requête d'interrogation précédente par le lecteur de radio-identification distant, ou après un délai prédéterminé durant lequel aucune réponse n'a été reçue par le lecteur de radio-identification distant suite à l'émission.

L'invention a également pour objet un aéronef comprenant un dispositif de détection tel que défini précédemment.

Avantageusement, le dispositif est apte à mettre-en-œuvre un procédé tel que défini précédemment.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig1] illustre un dispositif de détection d'une position mécanique d'une pièce mobile selon l'invention ;
[Fig2] illustre schématiquement une étiquette RFID du dispositif de la figure 1 ;
[Fig3] illustre le dispositif de la figure 1 lorsque la pièce mobile est dans une première position extrême ;
[Fig4] illustre le dispositif de la figure 1 lorsque la pièce mobile est dans une position intermédiaire ;
[Fig5] illustre le dispositif de la figure 1 lorsque la pièce mobile est dans une deuxième position extrême ; et
[Fig6] illustre les étapes d'un procédé de détection de la pièce mobile selon l'invention.

### Exposé détaillé d'au moins un mode de réalisation

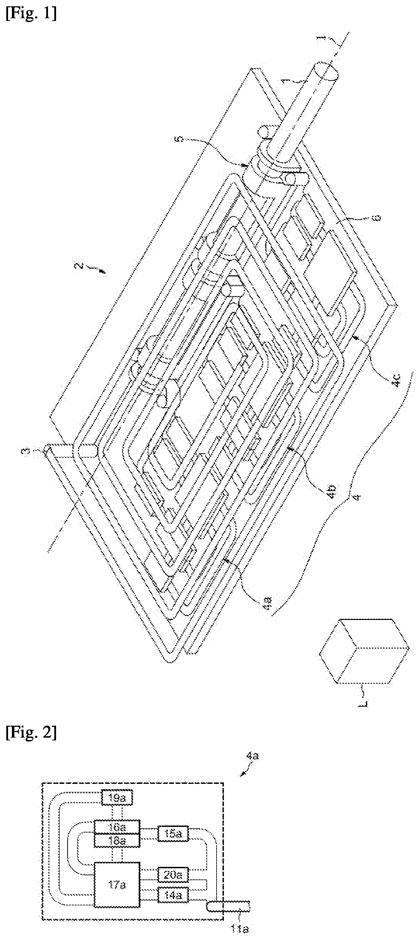

On a représenté schématiquement sur la figure 1 un dispositif 2 de détection d'une position occupée par une pièce mobile 1.

La pièce mobile 1 est par exemple un élément mécanique, ici tubulaire, d'un composant aéronautique embarqué à bord d'un aéronef, dont on désire connaitre la position. La pièce mobile 1 peut également être prismatique ou cylindrique, et peut également simplement être en liaison fixe, pivot ou à rotule avec un tel composant aéronautique embarqué.

La pièce 1 est mobile, par exemple au cours du fonctionnement du composant aéronautique de l'aéronef, et est ainsi apte à adopter une pluralité de positions comprenant et s'étendant entre une première position extrême, une deuxième position extrême et au moins une position intermédiaire entre la première et la deuxième position extrêmes.

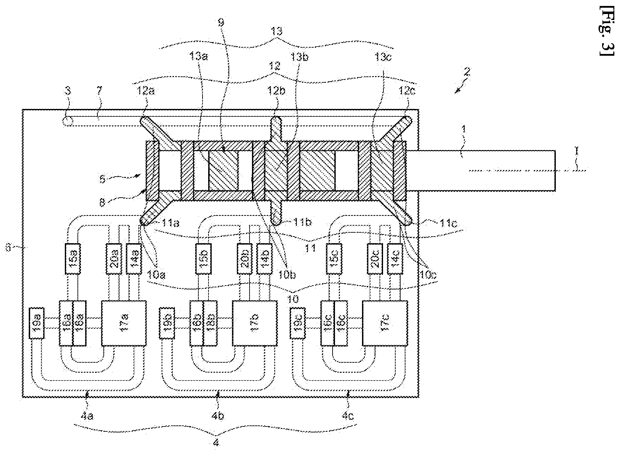

Dans l'exemple illustré sur les figures, la pièce mobile 1 se déplace sur un axe I visible notamment sur les figures 1, 3, 4 et 5. Les figures 3, 4 et 5 illustrant chacune une vue de dessus d'une position possible de la pièce mobile 1 ainsi qu'un état du dispositif de détection 2 correspondant.

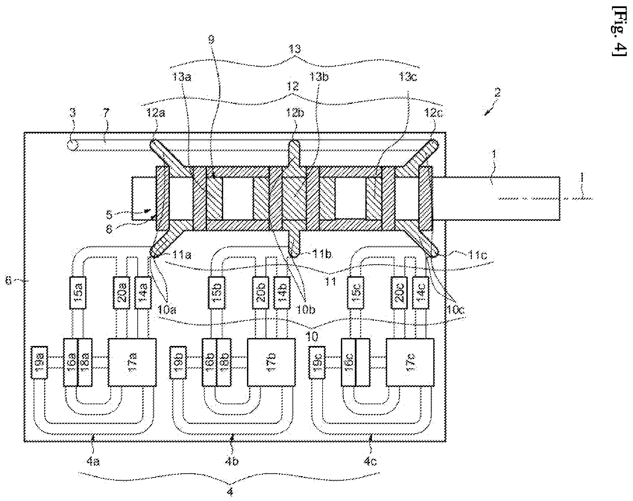

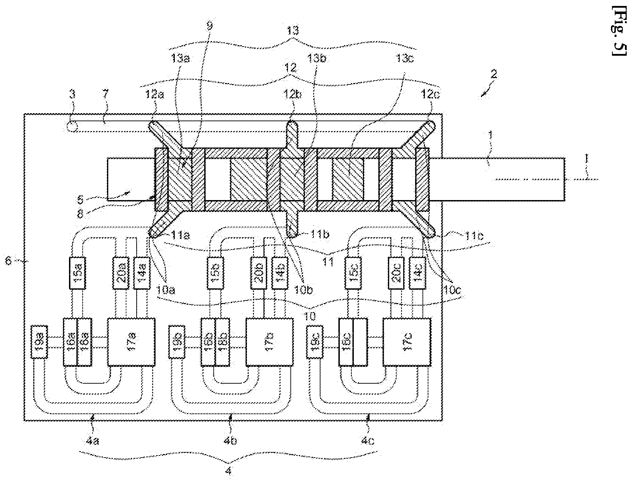

La figure 3 représente donc le dispositif de détection 2 selon l'invention lorsque la pièce mobile 1 occupe la première position extrême, la figure 4 représente le dispositif de détection 2 lorsque la pièce mobile 1 est dans une position intermédiaire entre la première position extrême et la deuxième position extrême, et la figure 5 représente le dispositif de détection 2 lorsque la pièce mobile 1 est dans la deuxième position extrême.

Le dispositif 2 comprend une antenne fixe 3, une pluralité d'étiquettes de radio-identification 4 dites étiquettes RFID et un contacteur mécanique 5. L'ensemble est monté sur une carte de circuit imprimé ou circuit 6 sur laquelle est tracée au moins une piste de connexion électrique 7 (Figure 3).

Sur l'exemple illustré, le dispositif 2 comprend ainsi trois étiquettes RFID 4a, 4b et 4c.

L'antenne 3 est illustrée sur la figure 1, et n'a pas été reprise sur les autres figures par soucis de clarté.

L'antenne 3 est une antenne classiquement utilisée dans le domaine de la radio-identification. Elle est destinée à recevoir une onde électromagnétique envoyée par un lecteur RFID L, et à transformer l'onde électromagnétique reçue en un signal électrique.

L'antenne 3 est raccordée à la piste de connexion électrique 7 de sorte que l'antenne 3 transmet le signal électrique résultant de l'onde électromagnétique par l'intermédiaire de la piste 7.

Le contacteur mécanique 5 comprend une armature fixe 8 montée sur la carte 6 et une portion mobile 9 solidarisée à la pièce mobile 1 ou, dans un mode de réalisation, faisant partie de la pièce mobile 1. L'armature fixe 8 comprend un passage axial orienté suivant la trajectoire d'axe I de la pièce mobile 1, dans lequel se déplace la pièce mobile 1.

Les étiquettes RFID 4 sont disposées sur la carte 6 au voisinage et le long du trajet de déplacement de la pièce mobile 1 sur la carte 6. Ainsi, sur l'exemple illustré, les étiquettes RFID 4 sont disposées parallèlement à l'axe I.

Le contacteur mécanique 5 est raccordé d'une part à la piste 7 de façon à être connecté électriquement à l'antenne 3 et d'autre part à chacune des étiquettes RFID 4a, 4b, 4c de la pluralité 4 d'étiquettes RFID. Une connexion électrique peut ainsi être établie entre l'antenne 3 et chacune des étiquettes 4 RFID.

A cet effet, l'armature fixe 8 du contacteur mécanique 5 comprend une pluralité de broches de connexion agencées par paires 10.

Plus particulièrement, l'armature fixe 8 comprend une paire de broches 10 pour chaque étiquette RFID, de sorte que chaque étiquette 4 soit associée à une unique paire de broches 10. Ainsi, dans l'exemple illustré sur les figures, l'armature 8 comprend trois paires de broches 10a, 10b et 10c.

L'étiquette RFID 4a est donc associée exclusivement à la première paire de broches 10a, l'étiquette RFID 4b est associée exclusivement à la deuxième paire de broches 10b et l'étiquette RFID 4c est associée exclusivement à la troisième paire de broches 10c.

Chaque paire de broches 10 comporte ainsi une première broche de connexion 11 connectée à une étiquette RFID et une deuxième broche de connexion 12 au contact de la piste 7 connectée à l'antenne 3.

Ainsi, sur l'exemple illustré, les paires de broches 10a, 10b et 10c comprennent des premières broches 11a, 11b et 11c respectives connectées chacune à une étiquette RFID 4a, 4b ou 4c, et des deuxièmes broches 12a, 12b et 12c connectées chacune à l'antenne 3 par l'intermédiaire de la piste 7.

Les deux broches 11 et 12 de chaque paire de broches 10 sont sensiblement alignées radialement selon une direction perpendiculaire au trajet de déplacement.

Lors de son déplacement, la pièce mobile 1 se déplace dans le contacteur 5 entre les broches correspondantes 11 et 12 de l'armature fixe 8 et entre en contact avec les deux broches 11 et 12 d'une même paire 10 simultanément.

La portion mobile 9 comprend une pluralité de passerelles 13 électriquement conductrices aptes à relier les deux broches 11 et 12 d'une même paire de broches 10.

Plus précisément, les passerelles 13 sont des éléments annulaires ou prismatiques conducteurs enserrant une partie de la portion de la pièce mobile 1 insérée dans l'armature fixe 8. Les passerelles 13 sont solidarisées à la pièce mobile 1 pour le déplacement de la pièce mobile 1 le long du trajet de déplacement. Alternativement, la portion mobile 9 est usinée directement sur la pièce mobile 1 et est un élément de cette pièce mobile 1. La pluralité de passerelles électriquement conductrices 13 et la pièce mobile 1 peuvent donc former une unique pièce.

Les passerelles 13 ont une dimension axiale au moins égale à la largeur des extrémités des broches 11 et 12 destinées à être en contact avec les passerelles 13 afin d'établir un contact suffisant avec les broches 11 et 12 d'une même paire de broche 10.

De plus, chacune des passerelles 13 s'étend radialement suffisamment pour entrer en contact avec les deux broches 11 et 12 d'une même paire de broches 10 lorsque la pièce mobile 1 est positionnée de sorte que ladite passerelle 13 soit alignée radialement avec lesdites broches 11 et 12.

Ainsi, chaque passerelle 13 de la pluralité de passerelles transmet le courant entre les deux broches 11 et 12 d'une paire de broches 10 lorsque la pièce mobile 1 est positionnée de sorte que ladite passerelle 13 soit alignée radialement avec ladite paire de broches 10.

Les passerelles 13 de la pluralité de passerelles sont espacées les unes des autres sur la pièce mobile 1. L'espacement entre chacune des passerelles 13 est constant et n'évolue pas au cours du mouvement de la pièce mobile 1.

Elles sont positionnées sur la pièce mobile 1 de sorte que, pour chaque position occupée par la pièce mobile 1, le contact électrique soit uniquement établi entre les broches 11 et 12 des paires de broches 10 associées aux étiquettes RFID 4 formant une combinaison unique d'étiquette RFID pour ladite position occupée par la pièce mobile 1.

En d'autres termes, à chaque position de la pièce mobile 1 est défini une combinaison unique d'au moins une étiquette RFID de la pluralité d'étiquettes 4. Cette combinaison d'étiquettes correspond aux étiquettes 4 destinées à être activées, c'est-à-dire à recevoir le courant électrique provenant de l'antenne 3 lorsque l'antenne 3 reçoit une requête d'interrogation du lecteur RFID L que la pièce mobile 1 occupe une position donnée.

Ainsi, les passerelles 13 sont espacées et positionnées sur la pièce mobile 1 de sorte que pour chaque position de la pièce mobile 1, seules les paires de broches 10 associées aux étiquettes RFID formant la combinaison unique pour ladite position possible soient alignées radialement avec une passerelle 13.

Ainsi, sur l'exemple illustré, la pluralité de passerelles 13 comprend une première passerelle 13a, une deuxième passerelle 13b et une troisième passerelle 13c espacées entre elles d'une distance axiale au moins égale à une dimension axiale des extrémités des broches 11 et 12 destinées à être au contact des passerelles 13. Les passerelles 13a, 13b et 13c sont solidaires en translation avec la pièce mobile 1 selon le trajet de déplacement.

La première passerelle 13a et la troisième passerelle 13c s'étendent axialement sur une distance sensiblement égale à la dimension axiale des extrémités des broches 11 et 12 destinées à être au contact des passerelles 13, tandis que la deuxième passerelle 13b, qui est positionnée axialement entre la première passerelle 13a et la troisième passerelle 13c s'étend axialement sur une distance sensiblement comprise entre deux fois et deux fois et demi la dimension axiale des extrémités des broches 11 et 12 destinées à être au contact des passerelle 13. La deuxième passerelle 13b s'étend donc axialement sur une distance sensiblement comprise entre deux fois et deux fois et demie la dimension axiale des première et troisième passerelles 13a et 13c.

Ainsi, lorsque la pièce mobile 1 occupe la première position extrême illustrée sur la figure 3, aucune passerelle 13 n'est alignée radialement avec la première paire de broches 10a de sorte qu'aucune connexion électrique n'est établie entre l'étiquette RFID 4a et l'antenne 3. Au contraire, les passerelle 13b et 13c sont respectivement alignées avec les paires de broches 10b et 10c, de sorte qu'une connexion électrique est établie entre l'antenne 3 et les étiquettes RFID 4b et 4c. De cette manière, si l'antenne 3 reçoit une requête d'interrogation du lecteur RFID alors que la pièce mobile 1 occupe cette première position, seules les étiquettes RFID 4b et 4c sont activées et aptes à élaborer une réponse et à la transmettre à l'antenne 3 pour émission vers le lecteur RFID L.

La combinaison unique d'étiquettes RFID pour la première position extrême comprend donc les étiquettes RFID 4b et 4c.

De même, lorsque la pièce mobile 1 occupe la position intermédiaire illustrée sur la figure 4, aucune passerelle 13 n'est alignée axialement avec la première paire de broches 10a et la troisième paire de broches 10c, de sorte qu'aucune connexion électrique n'est établie entre les étiquettes RFID 4a, 4c et l'antenne 3. Au contraire, seule la passerelle 13b est alignée radialement avec la paire de broches 10b, de sorte qu'une connexion électrique est établie entre l'antenne 3 et l'étiquette RFID 4b. De cette manière, si l'antenne 3 reçoit une requête d'interrogation du lecteur RFID L alors que la pièce mobile 1 occupe cette position intermédiaire, seule l'étiquette RFID 4b est activée et est apte à élaborer une réponse et à la transmettre à l'antenne 3 pour émission vers le lecteur RFID L.

La combinaison unique d'étiquettes RFID pour la position intermédiaire comprend donc seulement l'étiquette RFID 4b.

Enfin, lorsque la pièce mobile 1 occupe la deuxième position extrême illustrée sur la figure 5, aucune passerelle 13 n'est alignée axialement avec la troisième paire de broches 10c de sorte qu'aucune connexion électrique n'est établie entre l'étiquette RFID 4c et l'antenne 3. Au contraire, les passerelle 13a et 13b sont respectivement alignées avec les paires de broches 10a et 10b, de sorte qu'une connexion électrique est établie entre l'antenne 3 et les étiquettes RFID 4a et 4b. De cette manière, si l'antenne 3 reçoit une requête d'interrogation du lecteur RFID L alors que la pièce mobile 1 occupe cette deuxième position extrême, seules les étiquettes RFID 4a et 4b sont activées et sont aptes à élaborer une réponse et à la transmettre à l'antenne 3 pour émission vers le lecteur RFID L.

La combinaison unique d'étiquettes RFID pour la deuxième position extrême comprend donc les étiquettes RFID 4a et 4b.

Le contacteur mécanique 5 est ainsi configuré pour établir une connexion électrique entre l'antenne 3 et une unique combinaison d'au moins une étiquette RFID de la pluralité d'étiquettes RFID 4 pour chaque position de la pièce mobile 1.

La figure 2 illustre l'étiquette RFID 4a. Les étiquettes RFID 4 de la pluralité d'étiquettes RFID sont identiques, de sorte que la description de la première étiquette 4a qui suit s'applique également aux étiquettes 4b et 4c et à l'ensemble des étiquettes 4 de la pluralité d'étiquettes RFID.

L'étiquette RFID 4a est une étiquette RFID passive classique, c'est-à-dire dépourvue de batterie embarquée et alimentée uniquement par une onde électromagnétique émise par le lecteur RFID L distant et captée par l'antenne 3.

L'étiquette RFID 4a comprend un démodulateur 14a, un convertisseur 15a, un régulateur de tension 16a, un calculateur 17a, un système de réinitialisation 18a du calculateur 17a, une horloge interne 19a et un rétro-modulateur 20a.

Le démodulateur 14a et le convertisseur 15a sont chacun directement connectés à la première broche 11a de la paire de broches 10a associée à l'étiquette RFID 4a de sorte que l'antenne 3 délivre le signal électrique résultant de l'onde électromagnétique en entrée du démodulateur 14a et du convertisseur 15a lorsqu'une passerelle 13 est alignée avec ladite paire de broches 10a et qu'une requête d'interrogation est captée par l'antenne 3.

Le convertisseur 15a assure la conversion du signal électrique reçu par l'antenne 3 en un courant continu. Le convertisseur 15a délivre en sortie le courant continu converti au régulateur de tension 16a, d'une part, et au système de réinitialisation 18a, d'autre part.

Ainsi, le régulateur de tension 16a est directement connecté à la sortie du convertisseur 15a de sorte que le convertisseur 15a délivre un courant électrique au régulateur de tension 16a.

Le régulateur de tension 16a est connecté en sortie d'une part à l'horloge interne 19a et au calculateur 17a d'autre part.

Le régulateur de tension 16a reçoit donc en entrée le courant électrique généré par le convertisseur 15a et est apte à délivrer en sortie une tension continue adaptée pour l'alimentation du calculateur 17a et pour l'alimentation de l'horloge interne 19a.

Le système de réinitialisation 18a du calculateur est aussi directement connecté à la sortie du convertisseur 15a de sorte que le convertisseur 15a délivre un courant électrique généré en entrée du système de réinitialisation 18a. Le système de réinitialisation 18a est en outre directement connecté en sortie au calculateur 17a.

Le système de réinitialisation 18a est constitué par un système connu de type PoR, abréviation du terme anglosaxon « Power-on Reset », capable d'initialiser ou de réinitialiser le calculateur 17a lorsqu'un courant électrique est appliqué au système 18a.

Le système de réinitialisation 18a reçoit donc en entrée le courant électrique généré par le convertisseur 15a et réinitialise le calculateur 17a.

Le démodulateur 14a est connecté en entrée à la première branche 11a de la paire de broches 10a associée à l'étiquette RFID 4a de sorte que le démodulateur 14a est apte à recevoir le signal reçu par l'antenne 3 lorsqu'une passerelle 13 est alignée avec ladite paire de broche 10a. Le démodulateur 14a est connecté en sortie au calculateur 17a.

Le démodulateur 14a assure la démodulation du signal électrique reçu par l'antenne 3 et fournit le signal démodulé en entrée du calculateur 17a. En d'autres termes, le démodulateur 14a convertit en continu, démodule le signal reçu par l'antenne 3 et l'envoie au calculateur 17a. Le signal électrique délivré par l'antenne 3 au démodulateur 14a est ainsi un signal modulé.

L'horloge interne 19a est directement connectée au calculateur 17a et est configurée pour envoyer des informations temporelles au calculateur 17a afin de permettre une synchronisation des tâches exercées par le calculateur 17a.

Le calculateur 17a est un circuit intégré apte à traiter la requête d'interrogation démodulée transmise par le démodulateur 14a, c'est-à-dire à vérifier que la requête d'interrogation est correcte, à élaborer une réponse à la requête d'interrogation, et à transmettre la réponse au rétro-modulateur 20a.

Le calculateur 17a est ainsi directement connecté au rétro-modulateur 20a.

Le rétro-modulateur 20a est un composant connu des étiquettes RFID passives destiné à moduler la réponse élaborée par le calculateur 17a à l'aide de l'onde reçue du lecteur RFID et captée par l'antenne 3.

Le rétro-modulateur 20a est ainsi directement connecté à la première broche 11a de la paire 10a associée à l'étiquette RFID 4a, de sorte à être apte à transmettre directement les signaux électriques à destination de l'antenne 3 lorsqu'une passerelle 13 est alignée radialement avec les broches 11a et 12a de la paire 10a.

Le rétro-modulateur 20a fournit à l'antenne 3 en sortie la réponse modulée par l'intermédiaire de la paire de broches 10a et d'une passerelle 13 alignée radialement avec la paire de broches 10a. L'antenne 3 est apte à émettre une onde électromagnétique et à transmettre la réponse modulée au lecteur RFID L.

Les étiquettes RFID 4 de la pluralité d'étiquettes RFID sont identiques dans leur conception, de sorte que la description qui précède s'applique également aux étiquettes 4b et 4c et à l'ensemble des étiquettes 4 de la pluralité d'étiquettes RFID.

Ainsi, l'étiquette RFID 4b comprend également un démodulateur 14b, un convertisseur 15b, un régulateur de tension 16b, un calculateur 17b, un système de réinitialisation 18b du calculateur 17b, une horloge interne 19b et un rétro-modulateur 20b. L'étiquette RFID 4b fonctionne de façon identique à l'étiquette RFID 4a décrite précédemment.

De même, l'étiquette RFID 4c comprend également un démodulateur 14c, un convertisseur 15c, un régulateur de tension 16c, un calculateur 17c, un système de réinitialisation 18c du calculateur 17c, une horloge interne 19c et un rétro-modulateur 20c. L'étiquette RFID 4c fonctionne de façon identique à l'étiquette RFID 4a décrite précédemment.

Néanmoins, chacune des étiquettes RFID 4 possède un identifiant unique de manière à pouvoir être ciblée par une requête envoyée par le lecteur RFID L. Alternativement, les étiquettes RFID 4 pourraient être chacune d'une conception différente.

Le dispositif de détection 2 assure la détection de la position occupée par la pièce mobile 1 en mouvement entre la première position extrême et la deuxième position extrême, et au moins une position intermédiaire.

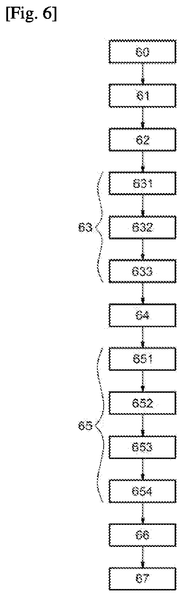

La figure 6 illustre les étapes d'un tel procédé de détection de position d'une pièce mobile 1 entre une première position extrême, une deuxième position extrême et au moins une position intermédiaire. La description du procédé qui suit illustre ce procédé par un exemple dans lequel la pièce mobile 1 occupe la première position extrême, correspondant à la figure 3.

Lors d'une première étape 60, le lecteur de radio-identification distant L émet une requête d'interrogation de la position occupée par la pièce mobile 1 destinée à l'une des étiquettes de la pluralité d'étiquettes, en particulier ici par exemple destinée à l'étiquette 4a.

Lors d'une deuxième étape 61 l'antenne 3 reçoit en entrée une onde électromagnétique émise par le lecteur RFID L, l'onde électromagnétique reçue correspondant à la requête d'interrogation de l'étiquette RFID 4a émise par le lecteur RFID L distant à l'étape 60.

Lors d'une étape 62 suivante, les étiquettes RFID 4 formant la combinaison unique d'étiquettes RFID pour la position occupée par la pièce mobile 1 sont interrogées séquentiellement, l'une après l'autre.

Lors de l'étape 62 le signal reçu par l'antenne 3 est transmis sur la piste 7, et se propage donc jusqu'aux deuxièmes broches 12a, 12b et 12c des paires de broches 10.

Le signal reçu est alors transmis uniquement aux premières broches 11 des paires 10 avec lesquelles une passerelle 13 est alignée et établit un contact électrique.

Dans l'exemple décrit, la pièce mobile 1 occupe la première position illustrée sur la figure 3. Lorsque la pièce mobile 1 occupe cette première position extrême, aucune passerelle 13 n'est alignée radialement avec la première paire de broches 10a de sorte qu'aucune connexion électrique n'est établie entre l'étiquette RFID 4a et l'antenne 3. Au contraire, les passerelle 13b et 13c sont respectivement alignées avec les paires de broches 10b et 10c, de sorte qu'une connexion électrique est établie entre l'antenne 3 et les étiquettes RFID 4b et 4c.

Ainsi, le signal reçu par l'antenne 3 et transmis aux deuxièmes broches 12a, 12b et 12c est donc transmis par les passerelles 13b et 13c aux premières broches 13b et 13c des paires de broches 10b et 10c, tandis que la passerelle 13a n'établit pas de contact électrique entre les broches 11a et 12a. Les deuxièmes broches ayant reçu le signal transmettent alors ce signal aux étiquettes RFID auxquelles elles sont raccordées, qui sont ainsi activées.

Ainsi, dans cet exemple, seules les étiquettes 4b et 4c sont activées. En d'autres termes, seules les étiquettes 4b et 4c reçoivent le signal électrique reçu par l'antenne 3 pour leur alimentation.

Lors d'une phase 63 suivante du procédé, la requête d'interrogation est traitée par chaque étiquette RFID activée. Plus précisément, chacune des étiquettes RFID activées à l'étape 62 réalise individuellement la phase 63. Ainsi, dans l'exemple illustrée sur la figure 3, la phase 63 est mise-en-œuvre par les étiquettes RFID 4b et 4c.

Cette phase 63 comprend une première étape 631 dans laquelle la requête d'interrogation est démodulée par le démodulateur de chaque étiquette RFID activée.

La requête d'interrogation démodulée est ensuite transmise au calculateur des étiquette RFID activées (étape 632), qui vérifie la validité de la requête d'interrogation (étape 633). Plus précisément, l'étape 633 de vérification de la validité de la requête d'interrogation consiste par le calculateur de chaque étiquette RFID activée à vérifier que la requête est bien destinée à l'étiquette dont ledit calculateur fait partie, et à vérifier que la requête est correcte. Si ces deux conditions sont vérifiées, alors la requête d'interrogation est validée par ledit calculateur, sinon, elle n'est pas validée.

Dans l'exemple illustré sur la figure 3, les étiquettes activées sont les étiquettes 4b et 4c, et la requête d'interrogation émise est d'abord la requête destinée à l'étiquette 4a. Ainsi, la requête est démodulée par les démodulateurs 14b et 14c des étiquettes activées 4b et 4c, puis transmise respectivement par ces démodulateurs aux calculateurs 17b et 17c des étiquettes actives 4b et 4c, qui vérifient alors la validité de cette requête.

La requête reçue à ce stade étant la requête destinée à l'étiquette 4a, aucun des calculateurs 17b et 17c ne valide la requête d'interrogation reçue.

Au cours de l'étape 64 suivante, selon le résultat de la phase 63 de traitement de la requête, le calculateur de chaque étiquette RFID activée élabore une réponse à la requête d'interrogation émise par le lecteur RFID distant L. La réponse élaborée comprend par exemple une simple confirmation que l'étiquette RFID est activée. Plus précisément, cette étape 64 d'élaboration d'une réponse n'est effectuée que si la requête d'interrogation à été validée lors de la phase 63 de traitement, et plus particulièrement lors de la sous-phase 633 de vérification.

Si, au contraire, la requête d'interrogation n'est pas validée par le calculateur de l'étiquette activée lors de l'étape 633, alors aucune réponse n'est élaborée, et le procédé passe directement à une étape 66 décrite plus bas.

Dans l'exemple illustrée sur la figure 3, les calculateurs 17b et 17c n'élaborent ainsi aucune réponse puisque la requête d'interrogation n'a pas été validée.

Dans le cas où l'étape 64 d'élaboration d'une réponse a été effectuée, cette réponse élaborée est envoyée par l'antenne 3 au lecteur de radio-identification distant L (étape 65). Plus précisément, cette étape 65 comprend une première sous-étape 651 de transmission de la réponse élaborée par le calculateur au rétro-modulateur de la même étiquette. Dans une deuxième sous-étape 652, le rétro-modulateur module la réponse élaborée, puis transmet cette réponse modulée à l'antenne 3 par l'intermédiaire des broches de connexion et des passerelles précédemment décrites (sous-étape 653). Dans une sous-étape 654, l'antenne 3 envoie cette réponse modulée au lecteur de radio-identification distant L qui la reçoit (sous-étape 654).

Dans une étape suivante 66, l'ensemble des étapes précédentes 60 à 65 est répétée pour chacune des étiquettes restantes de la pluralité d'étiquettes, de sorte que ces étapes 60 à 65 soient réalisées une fois pour chacune des étiquettes de la pluralité d'étiquettes.

Plus précisément, cette étape 66 est mise-en-œuvre dès lors qu'une réponse à la précédente requête d'interrogation a été reçue par le lecteur RFID L distant, c'est-à-dire dès lors que l'étape 654 est terminée. Dans le cas où la requête d'interrogation n'a pas été validée par les calculateurs des étiquettes activées à l'étape 63, c'est-à-dire dans le cas où aucune réponse n'a été reçue par le lecteur RFID L et donc que les étapes 64 et 65 n'ont pas été effectuées, l'étape 66 est mise-en-œuvre à l'expiration d'un délai maximal prédéterminé de réponse.

Dans l'exemple décrit de la figure 3, la requête d'interrogation n'a été validée par aucun des calculateurs 17b et 17c des étiquettes activées 4b et 4c. Aucune réponse n'est donc élaborée, transmise ni reçue par le lecteur RFID L. A l'issue du délai maximal de réponse écoulé depuis l'envoie de la requête d'interrogation destinée à l'étiquette 4a par le lecteur de RFID L, ce lecteur RFID L émet une requête d'interrogation destinée à l'étiquette 4b dans une première répétition de l'étape 60.

Cette requête destinée à l'étiquette 4b, à l'instar de la précédente requête destinée à l'étiquette 4a, est captée par l'antenne 3, transmise sur la piste 7 puis reçues par les étiquettes 4b et 4c qui sont activées par sa réception. La requête d'interrogation est ensuite traitée individuellement par chacune des étiquettes RFID activées, c'est-à-dire ici par les étiquettes 4b et 4c.

Lors de cette étape de traitement 63 réalisée par chacune des étiquettes activées 4b et 4c, la requête d'interrogation destinée à l'étiquette 4b est ainsi démodulée par les démodulateurs 14b et 14c de ces étiquettes, puis transmise aux calculateurs 17b et 17c de ces étiquettes qui en effectuent la vérification.

Le calculateur 17c, comme précédemment, ne valide pas la requête étant donné que cette requête est destinée à l'étiquette 4b. Le calculateur 17c n'élabore donc aucune réponse à cette requête.

Au contraire, le calculateur 17b valide la requête lors de l'étape de traitement 63, et élabore donc une réponse à cette requête lors de l'étape 64.

L'étape suivante 65 consiste en la transmission par le calculateur 17b de la réponse élaborée au rétro-modulateur 20b, puis en la modulation de cette réponse élaborée par ledit rétro-modulateur 20b, en la transmission de cette réponse modulée à l'antenne 3 par l'intermédiaire de la paire de broche 10b et de la passerelle 13b, puis enfin en la transmission par l'antenne 3 de la réponse modulée au lecteur RFID L.

Le lecteur RFID L reçoit alors la réponse modulée élaborée par le calculateur 17b de l'étiquette 4b, et peut donc émettre une requête d'interrogation destinée à la dernière des étiquettes restantes de la pluralité d'étiquettes, à savoir l'étiquette 4c, lors d'une dernière répétition 66 des étapes 60 à 65.

A l'instar de la phase concernant la requête destinée à l'étiquette 4b, cette requête destinée à l'étiquette 4c est transmise aux étiquettes 4b et 4c qui sont donc activées, et seule l'étiquette 4c élabore et transmet une réponse au lecteur RFID L pour cette requête, l'étiquette 4b n'ayant pas validé la requête durant l'étape de traitement. Le lecteur RFID L reçoit donc une réponse de l'étiquette 4b à sa requête d'interrogation destinée à l'étiquette 4b.

Une requête destinée à chacune des étiquettes 4a, 4b, et 4c a donc été émise par le lecteur RFID L, ce qui conclue l'étape 66 de répétition.

Enfin, dans une dernière étape 67 suivante du procédé, la position occupée par la pièce mobile 1 est déterminée. Cette étape 67 est mise-en-œuvre lorsque le lecteur RFID L a réalisé l'étape 60 pour chacune des étiquettes de la pluralité d'étiquettes, et qu'il reçoit une réponse à la dernière requête qu'il a envoyée ou que le délai maximal de réponse depuis l'envoie de cette dernière requête est écoulé. En d'autres termes, l'étape 67 est mise-en-œuvre à l'issue de l'ultime répétition 66 des étapes 60 à 65.

Plus précisément, cette étape 67 est effectuée par le lecteur RFID L. En fonction des réponses reçues ou non émanant des étiquettes RFID par le lecteur RFID L suite aux émissions d'une requête d'interrogation destinée à chacune des étiquettes de la pluralité d'étiquettes, le lecteur RFID L peut déterminer quelles étiquettes sont activées, et donc reconstituer la combinaison unique d'étiquettes RFID activées associée à la position occupée par la pièce mobile 1. En effet, une absence de réponse par une étiquette RFID à une requête d'interrogation destinée à cette étiquette RFID signifie que la pièce mobile 1 n'occupe pas une position dans laquelle une passerelle 13 est alignée radialement avec la paire de broches 10 associée à cette étiquette RFID. Le lecteur RFID peut alors déterminer par correspondance la position occupée par la pièce mobile 1.

Dans le cas de l'exemple illustré à la figure 3, à l'issue des répétitions des étapes 60 à 65 pour chacune des étiquettes 4a, 4b et 4c de la pluralité d'étiquettes, le lecteur RFID L a reçu comme décrit plus haut une réponse uniquement des étiquettes 4b et 4c. La position occupée par la pièce mobile 1 est donc la position correspondant à la combinaison unique des étiquettes 4b et 4c, qui est comme décrit précédemment la première position extrême.

Le dispositif de détection 2 utilise donc la technologie de radio-identification pour proposer un capteur de position de la pièce mobile 1 fiable et constamment consultable, le capteur ne requérant ni batterie embarquée, ni connexion filaire pour le portage de données ou pour l'alimentation du capteur.

## Revendications

1. Dispositif de détection (2) de position d'une pièce mobile (1) entre une première position extrême, une deuxième position extrême et au moins une position intermédiaire, le dispositif de détection (2) comprenant une antenne fixe (3) et une pluralité d'étiquettes de radio-identification (4, 4a, 4b, 4c) disposées le long du trajet de la pièce mobile (1) entre lesdites positions extrêmes et intermédiaires, **caractérisé en ce qu'**il comprend un contacteur mécanique (5) configuré pour établir une connexion électrique entre l'antenne (3) et une unique combinaison d'au moins une étiquette de radio-identification (4, 4a, 4b, 4c) pour chaque position de la pièce mobile (1).

2. Dispositif de détection (2) selon la revendication 1, dans lequel le contacteur mécanique (5) est disposé autour de la pièce mobile (1) et comprend une armature fixe (8) et une portion mobile (9) solidaire de la pièce mobile (1).

3. Dispositif de détection (2) selon la revendication 2, dans lequel l'armature fixe (8) comprend une pluralité de paires de broches de connexion (10, 10a, 10b, 10c), chaque étiquette de radio-identification (4, 4a, 4b, 4c) étant associée à une unique paire de broches (10, 10a, 10b, 10c) comprenant une première broche (11, 11a, 11b, 11c) au contact de l'étiquette de radio-identification (4, 4a, 4b, 4c) à laquelle ladite paire de broches (10, 10a, 10b, 10c) est associée et une deuxième broche (12, 12a, 12b, 12c) au contact de l'antenne (3).

4. Dispositif de détection (2) selon la revendication 3, dans lequel la portion mobile (9) est solidarisée à la pièce mobile (1) et comprend une pluralité de passerelles (13, 13a, 13b, 13c) aptes à transmettre le courant entre les deux broches (11 et 12, 11a et 12a, 11b et 12b, 11c et 12c) d'une paire de broches (10, 10a, 10b, 10c) de connexion.

5. Dispositif de détection (2) selon la revendication 4, dans lequel la pluralité de passerelles (13, 13a, 13b, 13c) sont positionnées sur la pièce mobile (1) de sorte que, pour chaque position occupée par la pièce mobile (1), le courant est transmis uniquement entre les broches des paires (10, 10a, 10b, 10c) associées aux étiquettes de radio-identification (4, 4a, 4b, 4c) formant la combinaison unique d'étiquette de radio-identification pour ladite position occupée par la pièce mobile (1).

6. Procédé de détection de position d'une pièce mobile (1) entre une première position extrême, une deuxième position extrême et au moins une position intermédiaire, pour la mise-en-œuvre d'un dispositif de détection (2) selon l'une des revendications 1 à 5, **caractérisé en ce qu'**il comprend les étapes suivantes ;
- Emission (60) par un lecteur de radio-identification distant (L) d'une requête d'interrogation de la position occupée par la pièce mobile (1) destinée à l'une des étiquettes de la pluralité d'étiquettes,
- Réception (61) par l'antenne (3) de la requête d'interrogation émise par le lecteur de radio-identification (L),
- Activation (62) des étiquettes de radio-identification de l'unique combinaison d'étiquettes pour ladite position occupée par la pièce mobile (1),
- Traitement (63) individuel par chaque étiquette activée de la requête d'interrogation,
- Selon le résultat du traitement (63), élaboration (64) par l'étiquette de radio-identification à laquelle est destinée la requête d'interrogation d'une réponse individuelle à la requête d'interrogation, si cette étiquette est activée,
- Emission (65) par l'antenne (3) de la réponse individuelle élaborée de l'étiquette au lecteur de radio-identification (L).
- Répétition (66) des étapes précédentes pour chacune des autres étiquettes de la pluralité d'étiquettes, de sorte qu'une requête d'interrogation soit émise par le lecteur de radio-identification pour chacune des étiquettes de la pluralité d'étiquettes.
- Détermination (67) de la position occupée par la pièce mobile (1).

7. Procédé selon la revendication 6, dans lequel les étiquettes de radio-identification (4, 4a, 4b, 4c) de la pluralité d'étiquettes comprennent chacune un calculateur (17a, 17b, 17c), l'étape de traitement (63) individuel par chaque étiquette activée de la requête d'interrogation comprenant les étapes suivantes, pour chaque étiquette activée :
- Démodulation (631) de la requête d'interrogation,
- Transmission (632) de la requête démodulée au calculateur (17, 17a, 17b, 17c), et
- Vérification (633) de la validité de la requête d'interrogation.

8. Procédé selon les revendications 6 ou 7, dans lequel la répétition (66) de l'étape d'émission (60) est réalisée après réception d'une réponse à la requête d'interrogation précédente par le lecteur de radio-identification (L) distant, ou après un délai prédéterminé durant lequel aucune réponse n'a été reçue par le lecteur de radio-identification (L) distant suite à l'émission (60).

9. Aéronef, **caractérisé en ce qu'**il comprend un dispositif de détection (2) selon l'une quelconque des revendications 1 à 5.

10. Aéronef selon la revendication 9, dans lequel le dispositif de détection (2) est apte à mettre en œuvre un procédé selon l'une des revendications 6 à 8.

## Patentansprüche

1. Erkennungsvorrichtung (2) für die Position eines beweglichen Teils (1) zwischen einer ersten Endposition, einer zweiten Endposition und mindestens einer Zwischenposition, wobei die Erkennungsvorrichtung (2) eine feste Antenne (3) und eine Vielzahl von entlang des Weges des beweglichen Teils (1) zwischen den End- und Zwischenpositionen angeordneten Funkidentifikationsetiketten (4, 4a, 4b, 4c) umfasst, **dadurch gekennzeichnet, dass** sie einen mechanischen Schalter (5) umfasst, der konfiguriert ist, um eine elektrische Verbindung zwischen der Antenne (3) und einer eindeutigen Kombination aus mindestens einem Funkidentifikationsetikett (4, 4a, 4b, 4c) für jede Position des beweglichen Teils (1) herzustellen.

2. Erkennungsvorrichtung (2) nach Anspruch 1, wobei der mechanische Schalter (5) um das bewegliche Teil (1) herum angeordnet ist und eine feste Ankerplatte (8) und einen beweglichen Abschnitt (9) umfasst, der fest mit dem beweglichen Teil (1) verbunden ist.

3. Erkennungsvorrichtung (2) nach Anspruch 2, wobei die feste Ankerplatte (8) eine Vielzahl von Anschlussstiftpaaren (10, 10a, 10b, 10c) umfasst, wobei jedes Funkidentifikationsetikett (4, 4a, 4b, 4c) mit einem einzigen Stiftpaar (10, 10a, 10b, 10c) verbunden ist, das einen ersten Stift (11, 11a, 11b, 11c) in Kontakt mit dem Funkidentifikationsetikett (4, 4a, 4b, 4c), mit dem das Stiftpaar (10, 10a, 10b, 10c) verbunden ist, und einen zweiten Stift (12, 12a, 12b, 12c) in Kontakt mit der Antenne (3) umfasst.

4. Erkennungsvorrichtung (2) nach Anspruch 3, wobei der bewegliche Abschnitt (9) fest mit dem beweglichen Teil (1) verbunden ist und eine Vielzahl von Gateways (13, 13a, 13b, 13c) umfasst, die in der Lage sind, den Strom zwischen den beiden Stiften (11 und 12, 11a und 12a, 11b und 12b, 11c und 12c) eines Anschlussstiftpaares (10, 10a, 10b, 10c) zu übermitteln.

5. Erkennungsvorrichtung (2) nach Anspruch 4, wobei die Vielzahl von Gateways (13, 13a, 13b, 13c) so am beweglichen Teil (1) positioniert sind, dass für jede vom beweglichen Teil (1) eingenommene Position der Strom nur zwischen den Stiften der Paare (10, 10a, 10b, 10c) übermittelt wird, die mit den Funkidentifikationsetiketten (4, 4a, 4b, 4c) verbunden sind, die die eindeutige Kombination aus einem Funkidentifikationsetikett für die vom beweglichen Teil (1) eingenommene Position bildet.

6. Verfahren zur Positionserkennung eines beweglichen Teils (1) zwischen einer ersten Endposition, einer zweiten Endposition und mindestens einer Zwischenposition, zum Einsatz einer Erkennungsvorrichtung (2) nach einem der Ansprüche 1 bis 5, **dadurch gekennzeichnet, dass** es die folgenden Schritte umfasst;
- Senden (60), durch einen entfernten Funkidentifikationsleser (L), einer Abfrageanforderung der vom beweglichen Teil (1) belegten Position, die für eines der Etiketten der Vielzahl von Etiketten bestimmt ist,
- Empfangen (61) der vom Funkidentifikationsleser (L) gesendeten Abfrageanforderung durch die Antenne (3),
- Aktivieren (62) der Funkidentifikationsetiketten der eindeutigen Kombination aus Etiketten für die Position, die das bewegliche Teil (1) einnimmt,
- individuelles Verarbeiten (63) der Abfrageanforderung durch jedes aktivierte Etikett,
- je nach Ergebnis des Verarbeitens (63), Ausarbeiten (64) durch das Funkidentifikationsetikett, für das die Abfrageanforderung bestimmt ist, einer individuellen Antwort auf die Abfrageanfrage, wenn dieses Etikett aktiviert ist,
- Senden (65) der ausgearbeiteten individuellen Antwort des Etiketts über die Antenne (3) an den Funkidentifikationsleser (L).
- Wiederholen (66) der vorherigen Schritte für jedes der anderen Etiketten der Vielzahl von Etiketten, so dass eine Abfrageanforderung vom Funkidentifikationsleser für jedes der Etiketten der Vielzahl von Etiketten gesendet wird.
- Bestimmen (67) der vom beweglichen Teil (1) eingenommenen Position.

7. Verfahren nach Anspruch 6, wobei die Funkidentifikationsetiketten (4, 4a, 4b, 4c) der Vielzahl von Etiketten jeweils einen Rechner (17a, 17b, 17c) umfassen, wobei der Schritt des individuellen Verarbeitens (63) der Abfrageanforderung durch jedes aktivierte Etikett für jedes aktivierte Etikett die folgenden Schritte umfasst:
- Demodulieren (631) der Abfrageanforderung,
- Übermitteln (632) der demodulierten Anforderung an den Rechner (17, 17a, 17b, 17c), und
- Überprüfen (633) der Gültigkeit der Abfrageanforderung.

8. Verfahren nach Anspruch 6 oder 7, wobei das Wiederholen (66) des Sendeschritts (60) nach Empfang einer Antwort auf die vorherige Abfrageanforderung durch den entfernten Funkidentifikationsleser (L) oder nach einer vorbestimmten Zeitspanne, in der nach dem Senden (60) keine Antwort vom entfernten Funkidentifikationsleser (L) empfangen wurde, durchgeführt wird.

9. Luftfahrzeug, **dadurch gekennzeichnet, dass** es eine Erkennungsvorrichtung (2) nach einem der Ansprüche 1 bis 5 umfasst.

10. Luftfahrzeug nach Anspruch 9, wobei die Erkennungsvorrichtung (2) in der Lage ist, ein Verfahren nach einem der Ansprüche 6 bis 8 umzusetzen.

## Claims

1. A device (2) for detecting the position of a movable piece (1) between a first extreme position, a second extreme position and at least one intermediate position, the detection device (2) comprising a fixed antenna (3) and a plurality of radio-frequency identification tags (4, 4a, 4b, 4c) disposed along the path of the movable piece (1) between said extreme and intermediate positions, **characterised in that** it comprises a mechanical contact switch (5) configured to establish an electrical connection between the antenna (3) and a single combination of at least one radio-frequency identification tag (4, 4a, 4b, 4c) for each position of the movable piece (1).

2. The detection device (2) according to claim 1, wherein the mechanical contact switch (5) is disposed around the movable piece (1) and comprises a fixed armature (8) and a movable portion (9) integral with the movable piece (1).

3. The detection device (2) according to claim 2, wherein the fixed armature (8) comprises a plurality of pairs of connection pins (10, 10a, 10b), 10c), each radio-frequency identification tag (4, 4a, 4b, 4c) being associated with a single pair of pins (10, 10a, 10b, 10c) comprising a first pin (11, 11a, 11b, 11c) in contact with the radio-frequency identification tag (4, 4a, 4b, 4c) to which said pair of pins (10, 10a, 10b, 10c) is associated and a second pin (12, 12a, 12b, 12c) in contact with the antenna (3).

4. The detection device (2) according to claim 3, wherein the movable portion (9) is secured to the movable piece (1) and comprises a plurality of gateways (13, 13a, 13b, 13c) capable of transmitting current between the two pins (11 and 12, 11a and 12a, 11b and 12b, 11c and 12c) of a pair of connection pins (10, 10a, 10b, 10c).

5. The detection device (2) according to claim 4, wherein the plurality of gateways (13, 13a, 13b, 13c) are positioned on the movable piece (1) so that, for each position occupied by the movable piece (1), current is transmitted only between the pins of the pairs (10, 10a, 10b, 10c) associated with the radio-frequency identification tags (4, 4a, 4b, 4c) forming the single combination of radio-frequency identification tag for said position occupied by the movable piece (1).

6. A method for detecting the position of a movable piece (1) between a first extreme position, a second extreme position and at least one intermediate position, for implementing a detection device (2) according to one of claims 1 to 5, **characterised in that** it comprises the following steps of;
- Emitting (60), by a remote radio-frequency identification reader (L), a request to query the position occupied by the movable piece (1) intended for one of the tags of the plurality of tags,
- Receiving (61), by the antenna (3), the request to query emitted by the radio-frequency identification reader (L),
- Activating (62) the radio-frequency identification tags of the single combination of tags for said position occupied by the movable piece (1),
- Individually processing (63), by each tag activated, the request to query,
- According to the result of the processing (63), formulating (64), by the radio-frequency identification tag for which the request to query is intended, an individual response to the request to query, if this tag is activated,
- Emitting (65), by the antenna (3), the individual response formulated of the tag to the radio-frequency identification reader (L).
- Repeating (66) the previous steps for each of the other tags of the plurality of tags, so that a request to query is emitted by the radio-frequency identification reader for each of the tags of the plurality of tags.
- Determining (67) the position occupied by the movable piece (1).

7. The method according to claim 6, wherein the radio-frequency identification tags (4, 4a, 4b, 4c) of the plurality of tags each comprise a calculator (17a, 17b, 17c), the step (63) of individually processing, by each tag activated, the request to query comprising the following steps of, for each tag activated:
- Demodulating (631) the request to query,
- Transmitting (632) the request demodulated to the calculator (17, 17a, 17b, 17c), and
- Verifying (633) the validity of the request to query.

8. The method according to claims 6 or 7, wherein the repetition (66) of the emission step (60) is carried out after receiving a response to the previous request to query by the remote radio-frequency identification reader (L), or after a predetermined time during which no response has been received by the remote radio-frequency identification reader (L) following the emission (60).

9. An aircraft, **characterised in that** it comprises a detection device (2) according to any of claims 1 to 5.

10. The aircraft according to claim 9, wherein the detection device (2) is capable of implementing a method according to one of claims 6 to 8.
